# EUROPÄISCHE PATENTSCHRIFT

(11) **EP 3 326 101 B1**
(45) Veröffentlichungstag und Bekanntmachung des Hinweises auf die Patenterteilung: **21.10.2020**
(21) Anmeldenummer: 16750636.9
(22) Anmeldetag: 19.07.2016
(51) Int. Cl.: G06F 21/57, G06F 21/10, G05B 19/042

(54) **VERFAHREN UND SYSTEM ZUR FIRMWARE-AKTUALISIERUNG EINER STEUEREINRICHTUNG ZUR PROZESSSTEUERUNG**
METHOD AND SYSTEM FOR FIRMWARE-UPDATING A CONTROL DEVICE FOR PROCESS CONTROL
PROCÉDÉ ET SYSTÈME D'ACTUALISATION DE MICROPROGRAMME D'UN DISPOSITIF DE COMMANDE POUR LA COMMANDE DE PROCESSUS

(30) Priorität: 23.07.2015 DE 102015112040
(43) Veröffentlichungstag der Anmeldung: 30.05.2018
(73) Patentinhaber: Phoenix Contact GmbH & Co. KG, 32825 Blomberg (DE)
(72) Erfinder: POPPE, Joachim, 31848 Bad Münder (DE)
(74) Vertreter: Blumbach · Zinngrebe Patentanwälte PartG mbB
(86) Internationale Anmeldenummer: PCT/EP2016/067214
(87) Internationale Veröffentlichungsnummer: WO 2017/013134

(56) Entgegenhaltungen:
- US-A1- 2008 052 698
- US-A1- 2008 148 249
- US-B1- 8 997 249

## Beschreibung

### Beschreibung

Die Erfindung betrifft allgemein die Automatisierungstechnik, und insbesondere ein Verfahren und ein System zur Firmware-Aktualisierung einer Steuereinrichtung zur Prozesssteuerung.

In der Automatisierungstechnik werden zur Steuerung von Maschinen und Anlagen Steuereinrichtungen eingesetzt, die über Sensoren und Aktoren an die jeweilige Maschine oder Anlage angebunden sind, wobei die Sensoren und Aktoren in der Regel über E/A-Baugruppen mit Ein- und Ausgängen der Steuereinrichtung verbunden sind. Heute sind die Steuereinrichtungen in der Regel als speicherprogrammierbare Steuerungen (SPS) ausgebildet, die mit einer durch einen Mikroprozessor der Steuereinrichtung ausführbaren Steuerapplikation programmiert werden können.

Insbesondere zur Steuerung von sicherheitsrelevanten Prozessen, d.h. von Vorgängen, von denen eine Gefahr für Mensch oder Maschine ausgeht, werden Sicherheitssteuerungen eingesetzt, die vorgegebenen Sicherheitsanforderungen genügen müssen. Zur Fehlerbehebung oder Funktionserweiterung einer Sicherheitssteuerung kann eine Aktualisierung der Firmware in Form eines Updates erforderlich sein. Die Firmware umfasst typischerweise eine Betriebssoftware der Steuereinrichtung, sowie eine auch als Loader bezeichnete Software zum Laden der Betriebssoftware, und kann ferner ein Betriebsprogramm für einen programmierbaren IC, wie beispielsweise einen FPGA (Field-Programmable Gate Array), welcher den Mikroprozessor zur Ausführung der Steuerapplikation bildet, umfassen. Um den an eine Sicherheitssteuerung gestellten Sicherheitsanforderungen zu genügen, kann ein solches Firmware-Update jedoch nicht ohne weiteres vom Benutzer durchgeführt werden. Ein Firmware-Update kann vom Gerätehersteller unter Einhaltung der Sicherheitsanforderungen durchgeführt werden, womit jedoch, insbesondere bei bereits im Feld installierten Steuerungseinrichtungen, ein hoher Logistik- und Kostenaufwand verbunden ist.

Aus EP 1 532 494 B1 ist ein Verfahren zum Aufspielen eines neuen Betriebsprogramms auf eine Sicherheitssteuerung bekannt, wobei eine in der Sicherheitssteuerung integrierte Download- und Freigabeeinrichtung zum Übernehmen eines neuen Betriebsprogramms vorhanden ist, und wobei die integrierte Freigabeeinrichtung die Übernahme des neuen Betriebsprogramms in Abhängigkeit von einer Freigabeinformation gestattet oder unterbindet. US-Patentanmeldung US2008/052698 ist weiterer Stand der Technik.

Der Erfindung liegt die Aufgabe zugrunde, einen Weg aufzuzeigen, wie ein Verfahren zur Firmware-Aktualisierung einer Steuereinrichtung, insbesondere einer Sicherheitssteuerung, vereinfacht und/oder verbessert werden kann.

Ein Kerngedanke der Erfindung besteht darin, herstellerseitig eine geräteindividuelle Berechtigungsprüfung für die Durchführung einer Firmware-Aktualisierung durchzuführen und bei erfolgreicher Berechtigungsprüfung einen geräteindividuellen Freischaltcode zur Durchführung der Firmware-Aktualisierung bereitzustellen, wobei zu diesem Zweck herstellerseitig eine Freigabeeinrichtung und nutzerseitig eine mit einer Steuereinrichtung verbindbare Aktualisierungs-Einrichtung vorgesehen sind.

Auf diese Weise kann vorteilhaft das Durchführen von Firmware-Updates unter der vollständigen Kontrolle des Herstellers erfolgen, wobei der dafür erforderliche Logistik- und Kostenaufwand erheblich reduziert werden kann, und wobei zudem eine Nachverfolgbarkeit durchgeführter Firmware-Updates geräteindividuell ermöglicht wird. Insbesondere kann ein sicheres Firmware-Update unter Kontrolle und Langzeitarchivierung durch den Hersteller ermöglicht werden.

Die oben genannte technische Aufgabe wird zum einen durch die Merkmale des Anspruchs 1 gelöst.

Danach ist ein Verfahren zur Firmware-Aktualisierung einer Steuereinrichtung zur Prozesssteuerung mit wenigstens einem Steuermodul vorgesehen, wobei dem Steuermodul eine in einem Systemspeicher der Steuereinrichtung gespeicherte Firmware zugeordnet ist. Gemäß dem Verfahren wird zunächst eine Firmware-Datei mit einer darin enthaltenen neuen Firmware für das wenigstens eine Steuermodul in einer mit der Steuereinrichtung verbindbaren Aktualisierungs-Einrichtung bereitgestellt. Dies kann auf eine beliebige geeignete Weise erfolgen, beispielsweise durch Aufspielen von einem Datenträger oder durch Internet-Download von einer Webseite des Herstellers der Steuereinrichtung. Die Steuereinrichtung ist insbesondere als Sicherheitssteuerung zur fehlersicheren Steuerung eines sicherheitskritischen Prozesses ausgebildet.

Das Verfahren sieht ferner vor, dass die Aktualisierungs-Einrichtung von der Steuereinrichtung erste Gerätedaten abruft, die in der Steuereinrichtung gespeichert sind, in Abhängigkeit dieser ersten Gerätedaten sowie in Abhängigkeit einer die neue Firmware identifizierenden Information eine signierte Geräte-Datei erzeugt, und die signierte Geräte-Datei zu einer zentralen Freigabe-Einrichtung überträgt. Dies kann beispielsweise in Antwort auf eine an der Aktualisierungs-Einrichtung eingegebene Benutzereingabe erfolgen, wobei durch die Benutzereingabe gegebenenfalls auch die neu zu installierende Firmware ausgewählt werden kann. Zum Erzeugen der signierten Geräte-Datei kann insbesondere auf an sich bekannte Weise eine digitale Signatur mit Hilfe eines geheimen Signaturschlüssels erzeugt werden, die es der zentralen Freigabe-Einrichtung ermöglicht, mittels eines zugehörigen Verifikationsschlüssels die Integrität der signierten Geräte-Datei zu prüfen. Im einfachsten Fall umfasst die signierte Geräte-Datei die ersten Gerätedaten und die Information, welche die neue Firmware identifiziert, sowie eine für diese Daten erzeugte digitale Signatur.

Von der zentralen Freigabeeinrichtung wird die empfangene signierte Geräte-Datei geprüft und nur bei erfolgreicher Prüfung ein Freischaltcode erzeugt und zurück zu der Aktualisierungs-Einrichtung übertragen, wobei der Freischaltcode zweite Gerätedaten und eine einzigartige Identifikationsinformation umfasst. Die einzigartige Identifikationsinformation kann vorteilhaft als GUID (Globally Unique Identifier) bereitgestellt werden und dient der Nachverfolgung durchgeführter Firmware-Updates.

Nach Empfang des Freischaltcodes führt die Aktualisierungs-Einrichtung eine Konsistenzprüfung der ersten Gerätedaten, in Abhängigkeit derer die signierte Geräte-Datei erzeugt wurde, und der im empfangenen Freischaltcode enthaltenen zweiten Gerätedaten durch. Alternativ kann das Verfahren ein erneutes Abrufen der in der Steuereinrichtung gespeicherten ersten Gerätedaten durch die Aktualisierungs-Einrichtung vorsehen, wobei die Aktualisierungs-Einrichtung in diesem Fall eine Konsistenzprüfung der erneut abgerufenen ersten Gerätedaten und der im empfangenen Freischaltcode enthaltenen zweiten Gerätedaten durchführt.

Die Kommunikation zwischen Aktualisierungs-Einrichtung und zentraler Freigabeeinrichtung kann vorzugsweise über eine direkte Kommunikationsverbindung, beispielsweise eine drahtgebundene Internet-Verbindung, erfolgen. Eine Übertragung der Daten zwischen Aktualisierungs-Einrichtung und zentraler Freigabeeinrichtung kann aber auch auf jede andere geeignete Weise, beispielsweise per E-Mail-Datenaustausch oder über ein Funknetz erfolgen. Prinzipiell wäre auch ein Datenaustausch mittels eines separaten Datenträgers denkbar.

Ein erneutes Abrufen der ersten Gerätedaten kann insbesondere dann vorteilhaft vorgesehen sein, wenn der Datenaustausch offline, d.h. nicht mittels einer bestehenden Kommunikationsverbindung erfolgt, da sich in diesem Fall die ersten Gerätedaten seit dem vorherigen Abrufen geändert haben können.

Nur bei erfolgreicher Konsistenzprüfung führt die Aktualisierungs-Einrichtung eine Aktualisierung der Firmware der Steuereinrichtung mit der neuen Firmware durch. Zum Durchführen der Firmware-Aktualisierung der Steuereinrichtung sieht das Verfahren vorteilhaft vor, dass die Aktualisierungs-Einrichtung zunächst die neue Firmware als Firmware-Datei zu der Steuereinrichtung überträgt und danach zum Initiieren der Aktualisierung einen geräteindividuellen Aktualisierungs-Befehl zu der Steuereinrichtung überträgt, wobei die Steuereinrichtung unter Ansprechen auf den empfangenen Aktualisierungs-Befehl automatisch die im Systemspeicher gespeicherte Firmware des Steuermoduls mit der in der empfangenen Firmware-Datei enthaltenen Firmware aktualisiert, wobei vorzugsweise die im Systemspeicher gespeicherte Firmware mit der neuen Firmware überschrieben wird. Die von der Aktualisierungs-Einrichtung übertragene Firmware-Datei kann zu diesem Zweck zunächst zwischengespeichert werden, wobei die Zwischenspeicherung beispielsweise in einem Parametrierungsspeicher der Steuereinrichtung erfolgen kann. Der Systemspeicher und/oder der Parametrierungsspeicher sind vorzugsweise als überschreibbarer Speicher, beispielsweise als Flash-Speicher oder als EEPROM ausgebildet.

Durch den Einsatz eines geräteindividuellen Aktualisierungs-Befehls wird vorteilhaft ein zusätzlicher Clone-Schutz erreicht, d.h. der Update-Vorgang ist nicht beliebig auf weitere Steuerungen, ohne Protokollierung beim Hersteller, übertragbar.

Vorteilhaft umfasst die Firmware-Datei ferner Absicherungsinformationen, wobei die Steuereinrichtung eine Konsistenzprüfung der Absicherungsinformationen ausführt und nur bei erfolgreicher Konsistenzprüfung einen Fortgang der Firmware-Aktualisierung zulässt. Die Absicherungsinformationen können insbesondere einen Prüfwert, beispielsweise in Form eines CRC-Wertes (CRC: Cyclic Redundancy Check), umfassen, mit dessen Hilfe Fehler, die während der Speicherung oder Übertragung der Firmware-Datei aufgetreten sind, erkannt werden können.

In einer vorteilhaften Ausführungsform kann die Steuereinrichtung mehrere, d.h. wenigstens zwei, Steuermodule umfassen. Vorteilhaft kann für jedes der Steuermodule eine eigene Firmware vorgesehen sein. Dementsprechend kann die Firmware-Datei eine neue Firmware für jedes der wenigstens zwei Steuermodule umfassen. Es kann auch vorgesehen sein, die Firmware der wenigstens zwei Steuermodule separat zu aktualisieren, wobei die Firmware-Datei in diesem Fall nur eine neue Firmware für eines der wenigstens zwei Steuermodule umfasst.

Mit besonderem Vorteil wird die im Freischaltcode enthaltene einzigartige Identifikationsinformation von der Aktualisierungs-Einrichtung zu der Steuereinrichtung übertragen und in der Steuereinrichtung gespeichert. Auf diese Weise wird vorteilhaft eine Nachverfolgbarkeit durchgeführter Firmware-Aktualisierungen auf der Steuereinrichtung ermöglicht.

Besonders vorteilhaft führt die zentrale Freigabe-Einrichtung eine Prüfung auf Update-Berechtigung durch, wobei insbesondere in Abhängigkeit von in der empfangenen signierten Geräte-Datei enthaltenen gerätespezifischen Informationen Freigabeinformationen aus einer Produktlebenszyklusmanagement-Datenbank abgerufen werden.

Zu diesem Zweck werden signifikante gespeicherte Daten bzw. Merkmale aus der Produktlebenszyklusmanagement-Datenbank abgerufen und gegen die empfangene signierte Geräte-Datei geprüft, unter Berücksichtigung gerätespezifischer Merkmale wie Gerätetyp, Hardware-Produktionsstand und/oder der letzten vorhandenen Firmware-Version.

Um die Prüfung auf Update-Berechtigung durch die zentrale Freigabe-Einrichtung und um die Konsistenzprüfung der ersten und zweiten Gerätedaten durch die Aktualisierungs-Einrichtung durchführen zu können, umfassen die ersten und/oder zweiten Gerätedaten vorzugsweise einen Gerätetyp, eine Hardware-Version und/oder eine Seriennummer der Steuereinrichtung und/oder eine Information zu wenigstens einer von der Steuereinrichtung aktuell ausgeführten Firmware.

Die Konsistenzprüfung der ersten und zweiten Gerätedaten umfasst insbesondere einen Vergleich jeweils enthaltener Daten, insbesondere einer geräteindividuellen Information wie der Seriennummer, um zu prüfen, ob der empfangene Freischaltcode für die Steuereinrichtung erstellt wurde, für die eine Firmware-Aktualisierung durchgeführt werden soll.

Um herstellerseitig eine vollständige Nachverfolgbarkeit erfolgreich durchgeführter Firmware-Updates zu ermöglichen, ist besonders vorteilhaft vorgesehen, dass die Aktualisierungs-Einrichtung eine Bestätigungsnachricht zu der zentralen Freigabe-Einrichtung überträgt, wenn die Firmware-Aktualisierung erfolgreich durchgeführt wurde, wobei die zentrale Freigabe-Einrichtung in Antwort auf die empfangene Bestätigungsnachricht die erfolgreiche Durchführung der Firmware-Aktualisierung protokolliert, wobei insbesondere ein die einzigartige Identifikationsinformation umfassender Protokolleintrag in der Produktlebenszyklusmanagement-Datenbank gespeichert wird. Vorteilhaft kann auch eine Historie der erfolgten Firmware-Updates zur Nachweisführung im Sinne eines geforderten Lebenszyklus-Management erstellt werden.

Zum Übernehmen der Firmware-Aktualisierung muss ein Systemneustart der Steuereinrichtung durchgeführt werden. Dementsprechend erfolgt das Übertragen der Bestätigungsnachricht von der Aktualisierungs-Einrichtung zu der zentralen Freigabe-Einrichtung nach erfolgtem Neustart.

Bei Neustart der Steuereinrichtung wird vorzugsweise ein Selbsttest der Steuereinrichtung durchgeführt. Ein solcher Selbsttest wird auch als POST (Power-On Self-Test) bezeichnet. Die bei einem POST typischerweise ausgeführten Schritte sind an sich bekannt und werden daher hier nicht näher ausgeführt.

Sofern die Steuereinrichtung mehrere Steuermodule umfasst, ist vorteilhaft vorgesehen, dass die Steuereinrichtung nach Aktualisieren der im Systemspeicher gespeicherten Firmware des wenigstens einen Steuermoduls eine Prüfung der Verträglichkeit der den unterschiedlichen Steuermodulen zugeordneten Firmware durchführt, wobei die Steuereinrichtung bei Erkennen einer Unverträglichkeit in einen sicheren Betriebszustand wechselt. Diese Prüfung kann als Bestandteil des POST vorgesehen sein, wobei die Steuereinrichtung auch bei Erkennen eines anderen Fehlers oder einer anderen Unverträglichkeit in einen sicheren Betriebszustand wechselt.

Zur Erhöhung der Sicherheit kann das Verfahren vorteilhaft eine fehlergesicherte und/oder verschlüsselte Datenübertragung vorsehen. Dies betrifft das Übertragen der signierten Geräte-Datei von der Aktualisierungs-Einrichtung zu der zentralen Freigabe-Einrichtung, das Übertragen des Freischaltcodes von der zentralen Freigabe-Einrichtung zu der Aktualisierungs-Einrichtung, das Übertragen des geräteindividuellen Aktualisierungs-Befehls von der Aktualisierungs-Einrichtung zu der Steuereinrichtung und/oder das Übertragen der im Freischaltcode enthaltenen einzigartigen Identifikationsinformation von der Aktualisierungs-Einrichtung zu der Steuereinrichtung.

Die oben genannte technische Aufgabe wird auch durch ein System gemäß Anspruch 12 gelöst.

Ein erfindungsgemäßes System zur Firmware-Aktualisierung einer Steuereinrichtung umfasst dementsprechend eine Steuereinrichtung zur Prozesssteuerung mit wenigstens einem Steuermodul, wobei dem Steuermodul eine in einem Systemspeicher der Steuereinrichtung gespeicherte Firmware zugeordnet ist, eine mit der Steuereinrichtung verbindbare Aktualisierungs-Einrichtung, und eine zentrale Freigabe-Einrichtung, wobei die Aktualisierungs-Einrichtung dazu ausgebildet ist, in der Steuereinrichtung gespeicherte erste Gerätedaten von der Steuereinrichtung abzurufen, in Abhängigkeit der ersten Gerätedaten und in Abhängigkeit einer eine neue Firmware identifizierenden Information eine signierte Geräte-Datei zu erzeugen, die signierte Geräte-Datei zu der zentralen Freigabe-Einrichtung zu übertragen, von der zentralen Freigabe-Einrichtung in Antwort auf die gesendete signierte Geräte-Datei einen Freischaltcode zu empfangen, eine Konsistenzprüfung der ersten Gerätedaten, in Abhängigkeit derer die signierte Geräte-Datei erzeugt wurde, und im empfangenen Freischaltcode enthaltener zweiter Gerätedaten durchzuführen oder die in der Steuereinrichtung gespeicherten ersten Gerätedaten von der Steuereinrichtung erneut abzurufen und eine Konsistenzprüfung der erneut abgerufenen ersten Gerätedaten und im empfangenen Freischaltcode enthaltener zweiter Gerätedaten durchzuführen, und bei erfolgreicher Konsistenzprüfung eine Aktualisierung der Firmware der Steuereinrichtung mit der neuen Firmware zu bewirken, und wobei die Freigabe-Einrichtung dazu ausgebildet ist, eine von der Aktualisierungs-Einrichtung empfangene signierte Geräte-Datei zu prüfen, bei erfolgreicher Prüfung einen Freischaltcode zu erzeugen, der zweite Gerätedaten und eine einzigartige Identifikationsinformation umfasst, und den Freischaltcode in Antwort auf die empfangene signierte Geräte-Datei zu der Aktualisierungs-Einrichtung zu übertragen.

Ein wesentlicher Aspekt der Erfindung kann darin gesehen werden, dass eine korrespondierende Nachverfolgbarkeit durchgeführter Firmware-Updates sowohl herstellerseitig als auch auf der jeweiligen Steuereinrichtung ermöglicht wird.

Zu diesem Zweck ist die Steuereinrichtung vorteilhaft dazu ausgebildet, die in dem von der Aktualisierungs-Einrichtung empfangenen Freischaltcode enthaltene einzigartige Identifikationsinformation zu speichern. Ferner ist die Aktualisierungs-Einrichtung vorteilhaft dazu ausgebildet, eine Bestätigungsnachricht zu der zentralen Freigabe-Einrichtung zu übertragen, wenn die Firmware-Aktualisierung erfolgreich durchgeführt wurde, und die zentrale Freigabeeinrichtung ist vorteilhaft dazu ausgebildet, in Antwort auf die empfangene Bestätigungsnachricht die erfolgreiche Durchführung der Firmware-Aktualisierung zu protokollieren, wobei insbesondere ein die einzigartige Identifikationsinformation umfassender Protokolleintrag in einer Produktlebenszyklusmanagement-Datenbank gespeichert wird.

Die Funktionalität der Aktualisierungs-Einrichtung liegt vorzugsweise im Verantwortungsbereich des Geräteherstellers. Besonders vorteilhaft kann vom Gerätehersteller eine Software bereitgestellt werden, im Folgenden auch als Download-Tool bezeichnet, welches der Benutzer auf einem herkömmlichen Computer, welcher eine Kommunikationsschnittstelle zur Kommunikation mit einer Steuereinrichtung aufweist, installieren kann, um so die Aktualisierungs-Einrichtung zu bilden.

Die oben genannte technische Aufgabe wird dementsprechend auch durch ein digitales Speichermedium gemäß Anspruch 14 gelöst.

Danach ist ein digitales Speichermedium mit darauf gespeicherten Anweisungen vorgesehen, welche dazu ausgebildet sind, Verfahrensschritte auszuführen, wenn sie auf einem Computer ausgeführt werden, umfassend: a) Abrufen von in einer mit dem Computer verbundenen Steuereinrichtung gespeicherten ersten Gerätedaten, b) Erzeugen einer signierten Geräte-Datei in Abhängigkeit der ersten Gerätedaten und in Abhängigkeit einer Information, welche eine neu bereitgestellte Firmware identifiziert, c) Übertragen der signierten Geräte-Datei zu einer zentralen Freigabe-Einrichtung, d) Empfangen eines Freischaltcodes von der zentralen Freigabe-Einrichtung in Antwort auf die gesendete signierte Geräte-Datei, wobei der Freischaltcode zweite Gerätedaten und eine einzigartige Identifikationsinformation umfasst, e) Durchführen einer Konsistenzprüfung der in Schritt a) abgerufenen ersten Gerätedaten und der im empfangenen Freischaltcode enthaltenen zweiten Gerätedaten, oder erneutes Abrufen der in der Steuereinrichtung gespeicherten ersten Gerätedaten und Durchführen einer Konsistenzprüfung der erneut abgerufenen ersten Gerätedaten und der im empfangenen Freischaltcode enthaltenen zweiten Gerätedaten, und f) Bewirken, nur bei erfolgreicher Konsistenzprüfung, einer Aktualisierung der Firmware der Steuereinrichtung mit der neuen Firmware.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile. Es zeigen:
- Fig. 1: eine schematische Darstellung einer bevorzugten Ausführungsform eines Systems zur Firmware-Aktualisierung,
- Fig. 2: ein schematisches Ablaufdiagramm einer ersten Phase einer Firmware-Aktualisierung, und
- Fig. 3: ein schematisches Ablaufdiagramm einer zweiten Phase einer Firmware-Aktualisierung.

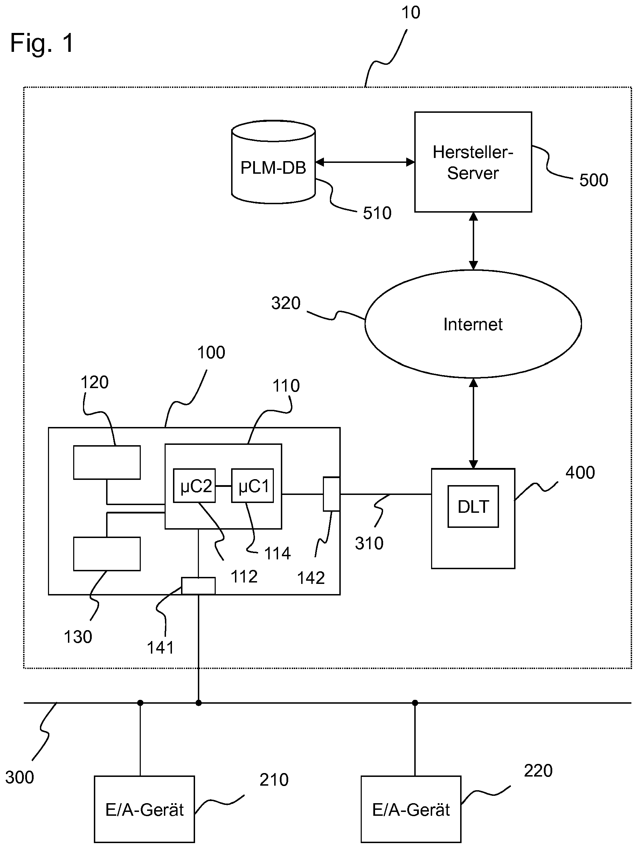

In Fig. 1 ist ein beispielhaftes System 10 zur Firmware-Aktualisierung einer als Sicherheitssteuerung ausgebildeten Steuereinrichtung 100, die beispielsweise in der Automatisierungstechnik zum Einsatz kommt. Im dargestellten Ausführungsbeispiel ist die Steuereinrichtung 100 über eine Schnittstelle 141 mit einem Kommunikationsnetzwerk 300 und über dieses mit Prozesseinrichtungen 210 und 220 verbunden. Das Kommunikationsnetzwerk 300 kann beispielsweise als PROFINET-Kommunikationsnetz ausgebildet sein. PROFINET (Process Field Network) ist ein im Bereich der Automatisierung eingesetzter offener Industrial Ethernet-Standard. Es kann aber auch jedes andere geeignete Kommunikationsnetzwerk, wie zum Beispiel ein Feldbus, eingesetzt werden.

Im dargestellten Ausführungsbeispiel umfasst die Steuereinrichtung 100 eine Steuereinheit 110 mit zwei Steuermodulen 112 und 114. Ferner umfasst die Steuerung 100 einen an die Steuereinheit 110 angeschlossenen, internen Systemspeicher 120, auf den von extern jedoch nicht zugegriffen werden kann. Hier ist die Firmware beispielsweise in Form einer zusammengesetzten Datei, einer sogenannten Container-Datei, abgelegt, die beim Systemstart entpackt und in Betrieb genommen wird. Des Weiteren ist in der Steuerung 100 ein Parametrierungsspeicher 130 vorgesehen, der die Konfiguration der Steuerung, das Anwendungsprogramm und gegebenenfalls weitere anwendungsspezifische Daten enthält. Ein Firmware-Update ist beispielsweise möglich, indem über die KommunikationsSchnittstelle 142 der Steuerung 100 ein neuer Firmwarecontainer auf den Parametrierungsspeicher abgelegt wird und dann ein Kommando an die Steuerung 100 eine Prozedur startet, welche die neue Firmware mit diesem Container in Betrieb nimmt.

Im dargestellten Ausführungsbeispiel ist die Steuereinrichtung 100 zu diesem Zweck über eine Kommunikationsverbindung 310 mit einem Computer 400 verbindbar, auf welchem ein vom Hersteller der Steuereinrichtung 100 bereitgestelltes Software-Tool, im Folgenden als Download-Tool und in Fig. 1 kurz als DLT bezeichnet, installiert ist.

Die Schnittstelle 142 kann beispielsweise als USB-Schnittstelle oder als Ethernet-Schnittstelle ausgebildet sein.

Der Computer 400 ist vorzugsweise über das Internet 320 mit einem Hersteller-Server 500 verbunden, wobei der Hersteller-Server 500 eine zentrale Freigabeeinrichtung umfasst. Eine Datenübertragung zwischen dem Download-Tool und der zentralen Freigabeeinrichtung kann statt über das Internet auch auf anderem Weg erfolgen. Im dargestellten Ausführungsbeispiel ist der Hersteller-Server 500 ferner mit einer Produktlebenszyklusmanagement-Datenbank 510, im Folgend e auch kurz PLM-DB, verbunden.

Nachfolgend wird ein bevorzugter Ablauf einer Firmware-Aktualisierung skizziert.
- Durch das Download-Tool werden von der Sicherheitssteuerung 100 Gerätedaten abgefragt, die den Typ, die Seriennummer und Angaben zum aktuellen Hardware- und Firmware-Stand enthalten.
- Durch das Download-Tool wird die Version der zu aktualisierenden Firmware ergänzt, gegen Verfälschung und Manipulation gesichert und als Gerätesignatur-File gespeichert.
- Das Gerätesignatur-File wird über E-Mail oder vorteilhafterweise über direkte Internet-Kommunikation an den Hersteller-Server 500 übermittelt.
- Beim Hersteller wird die Berechtigung für das Update geprüft, wobei dies vorteilhafterweise über einen auf dem Hersteller-Server 500 ablaufenden, als Freischaltgenerator ausgebildeten Server-Dienst erfolgt.
- Zur Prüfung der Berechtigung wird beim Hersteller die PLM-DB 510 abgefragt und die Konsistenz und Plausibilität der übermittelten Daten geprüft sowie die in der PLM-DB 510 enthaltene HW-Version auf eine Berechtigung für ein Update herangezogen.
- Sofern eine Update-Berechtigung vorliegt, wird ein abgesicherter gerätespezifischer Freischaltcode in Form einer Datei generiert, wobei diese einen einzigartigen Code enthält, der zur Nachverfolgbarkeit dient.
- Der Freischaltcode enthält Daten zum Gerätetyp, der Seriennummer, der Hardware-Version und einen Code zur Nachverfolgbarkeit.
- Der Freischaltcode ist gegen Verfälschung und Manipulation gesichert und wird über E-Mail oder vorzugsweise direkte Internet-Kommunikation an den Anwender des Download-Tools übermittelt
- Das Download-Tool liest einerseits die Firmware-Update-Datei in Form eines sicheren Firmware-Containers mit enthaltener Geräte- und Versionskennung ein, als auch den vom Hersteller generierten Freischaltcode.
- Das Download-Tool überprüft die Konsistenz der Daten von der Steuereinrichtung 100 mit den Daten im Freischaltcode und gibt den Download des sicheren Firmware-Containers auf die Steuereinrichtung 100 frei oder sperrt ihn.
- Nach erfolgtem Transfer der Firmware-Update-Datei auf die Steuereinrichtung 100 und einer Konsistenzprüfung auf der Steuereinrichtung 100 wird die Programmierung inklusive einer Gegenprüfung auf der Steuereinrichtung 100 ausgeführt.
- Zur Einleitung der Programmierung wird ein abgesichertes Programmierkommando verwendet.
- Sofern die Übertragung des Firmware-Containers oder dessen Programmierung nicht korrekt verlief, wird der Anwender informiert und das Gerät verbleibt im eigensicheren Zustand.
- In diesem Zustand ist eine erneute Programmierung notwendig und möglich.
- Der Anwender der Steuerung erhält eine Firmware-Update-Datei zugeschickt oder kann sich diese alternativ vom Hersteller über das Internet laden; dies bedeutet, dass die Firmware-Update-Datei nicht personalisiert ist.
- Die Firmware-Update-Datei ist eine sichere Container-Datei, die vom Hersteller generiert und durch einen Kopfdatensatz, auch als Header bezeichnet, zusätzlich gegen Datenverfälschung oder Daten-Manipulation gesichert wird.
- Die Firmware-Update-Datei enthält Firmware-Komponenten für beide Steuermodule der sicheren Steuerung 100 und gegebenenfalls weitere Komponenten, vorteilhaft zum Beispiel FPGA-Konfiguration und Firmware-Loader, die gemeinsam einen Freigabeprozess nach IEC 61508 durchlaufen haben und zertifiziert sind.
- Der Anwender startet das Download-Tool, liest die Firmware-Update-Datei und verbindet sich mit der Steuereinrichtung 100.
- Das Download-Tool generiert aus den Daten der Steuereinrichtung 100 und der Firmware-Update-Datei eine Signatur-Datei, in der Update-relevante Daten enthalten sind, wie zum Beispiel Seriennummer, Hardware-Version, vorhandene Firmware-Version und neue Firmware-Version.
- Die Signatur-Datei wird dem Hersteller übermittelt, zum Beispiel per E-Mail oder direkte Internet-Kommunikation.
- Der Hersteller generiert nach Prüfung der Update-Fähigkeit einen Freischaltcode in Form einer abgesicherten Datei und übermittelt diese dem Anwender, zum Beispiel per E-Mail oder vorteilhafterweise per direkter Internet-Kommunikation.
- Der Anwender liest den Freischaltcode zusammen mit der Firmware-Update-Datei in das Download-Tool ein und das Download-Tool prüft die Konsistenz des Freischaltcodes.
- Bei positiver Prüfung wird die Firmware-Update-Datei als sicherer Container auf die angeschlossene Steuereinrichtung 100 transferiert und dort auf Konsistenz des Containers geprüft, wobei insbesondere eine Prüfung des Headers erfolgt.
- Danach erfolgt die Programmierung in den Systemspeicher 120 und ein weiteres Rücklesen.
- Das Ergebnis des Transfers, der Programmierung und der Überprüfungen werden vom Download-Tool für den Anwender angezeigt und ein Update-Protokoll generiert.
- Nach der kompletten Programmierung muss das Gerät neu gestartet werden.
- Beim Anlauf der programmierten Firmware findet eine weitere Konsistenzprüfung statt, dabei überprüft der Firmware-Loader die Prüfsumme der zu ladenden Firmware.
- Nach dem Start der beiden diversitären Firmware-Komponenten erfolgt eine Prüfung, ob die FW-Versionen zueinander passen.

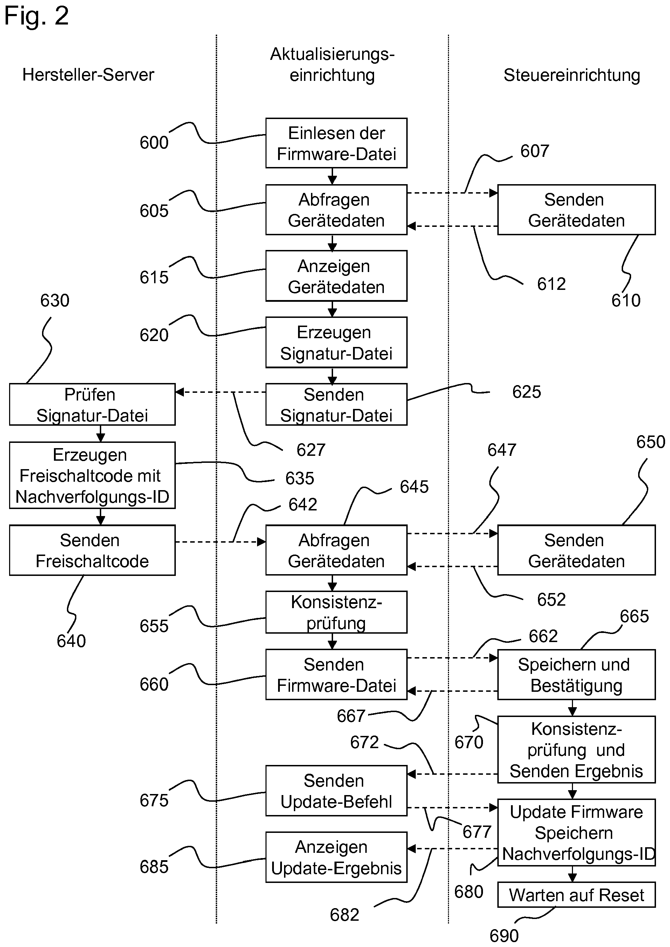

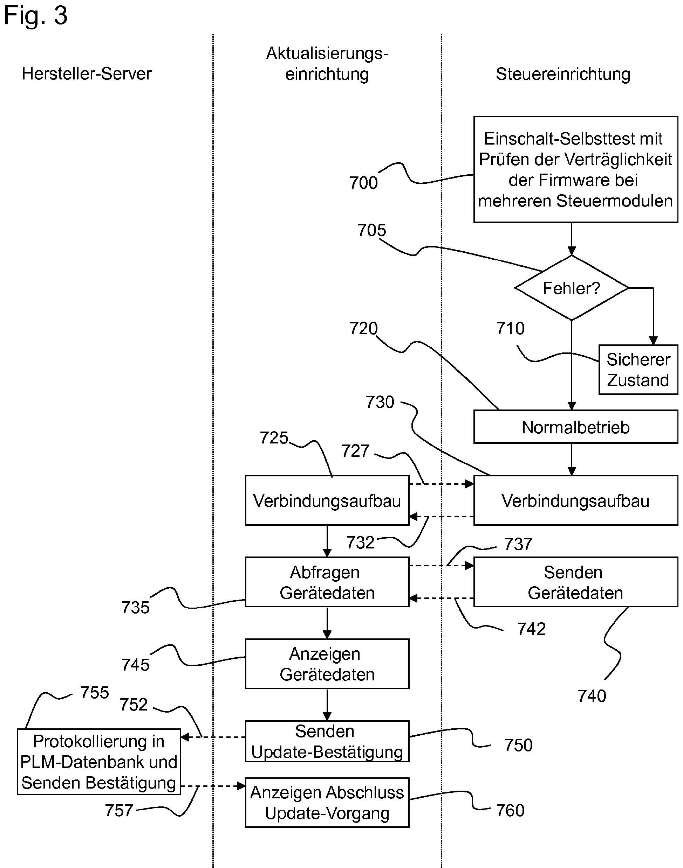

Ein bevorzugter Ablauf einer Firmware-Aktualisierung ist nochmals im Detail als Ablaufdiagramm in den Figuren 2 und 3 dargestellt, wobei Fig. 2 eine erste Phase und Fig. 3 eine zweite Phase zeigt.

Die in Fig. 2 dargestellte Phase 1 umfasst die folgenden Schritte.

In Schritt 600 wird die Firmware-Datei durch das Download-Tool auf der Aktualisierungs-Einrichtung 400 vom lokalen Dateisystem gelesen. In Schritt 605 wird die Steuereinrichtung 100 durch eine Datenabfrage identifiziert, wobei zu diesem Zweck die Aktualisierungs-Einrichtung 400 eine entsprechende Anfrage 607 zu der Steuereinrichtung 100 überträgt, die in Antwort auf diese Anfrage in Schritt 610 das Senden von ersten Gerätedaten bewirkt, die in Schritt 612 zur Aktualisierungs-Einrichtung 400 übertragen werden. Im dargestellten Ausführungsbeispiel ist vorgesehen, dass die von der Steuereinrichtung 100 empfangenen Gerätedaten in Schritt 615 dem Anwender angezeigt werden. Die Gerätedaten werden mit den Headerdaten der Firmware-Update-Datei abgesichert zum Hersteller übertragen, wobei zu diesem Zweck in Schritt 620 eine entsprechende Signatur-Datei erzeugt und in Schritt 625 zum Hersteller-Server 500 gesendet wird. Die in Schritt 627 zum Hersteller-Server 500 übertragene Signatur-Datei wird in Schritt 630 von einer im Hersteller-Server 500 enthaltenen Freigabeeinrichtung geprüft. Zur Berechtigungsprüfung nimmt der Hersteller-Server 500 einen Abgleich mit der PLM-DB 510 vor. Bei erfolgreicher Berechtigungsprüfung generiert der Hersteller-Server 500 in Schritt 635 einen abgesicherten Freischaltcode, beispielsweise in Form einer Aktivierungsdatei, welche eine Sicherung und einen einzigartigen Code als Nachverfolgungs-ID umfasst. In Schritt 640 sendet der Hersteller-Server 500 den Freischaltcode zur Aktualisierungs-Einrichtung 400. Der in Schritt 642 übertragene Freischaltcode wird von der Aktualisierungs-Einrichtung 400 empfangen und in Antwort auf den Empfang des in Schritt 642 übertragenen Freischaltcodes führt die Aktualisierungs-Einrichtung 400 im dargestellten Ausführungsbeispiel in Schritt 645 erneut eine Abfrage der ersten Gerätedaten von der Steuereinrichtung 100 durch, wobei zu diesem Zweck die Aktualisierungs-Einrichtung 400 eine entsprechende Anfrage 647 zu der Steuereinrichtung 100 überträgt, die in Antwort auf diese Anfrage in Schritt 650 das Senden von ersten Gerätedaten bewirkt, die in Schritt 652 zur Aktualisierungs-Einrichtung 400 übertragen werden. Das auf der Aktualisierungs-Einrichtung 400 ablaufende Download-Tool überprüft in Schritt 655 die Konsistenz von Gerät und Freischaltcode und nimmt bei erfolgreicher Konsistenzprüfung in Schritt 660 den Datentransfer vor. Zu diesem Zweck wird in Schritt 662 die Firmware-Update-Datei zu der Steuereinrichtung 100 übertragen und dort in Schritt 665 zunächst zwischengespeichert. Zur Zwischenspeicherung kann der Parametrierungsspeicher 130 oder ein anderer geeigneter, auch flüchtiger, Speicher verwendet werden. In Schritt 667 wird eine Bestätigung der Speicherung zur Aktualisierungs-Einrichtung 400 übertragen. In Schritt 670 erfolgt eine Konsistenzprüfung der Firmware-Update-Datei auf formale Korrektheit, wobei das Ergebnis der Prüfung in Schritt 672 zur Aktualisierungs-Einrichtung 400 übertragen wird. Bei erfolgreicher Konsistenzprüfung sendet die Aktualisierungs-Einrichtung 400 daraufhin in Schritt 675 einen geräteindividuellen Update-Befehl zur Steuereinrichtung 100, wobei vorzugsweise das Ergebnis der Konsistenzprüfung dem Anwender angezeigt wird und dieser die Ausführung des Updates, d.h. die Programmierung bzw. das Überschreiben des Systemspeichers 120 mit der neuen Firmware, zusätzlich durch eine Eingabe bestätigt. In Antwort auf den Empfang des in Schritt 677 übertragenen Update-Befehls führt die Steuereinrichtung 100 in Schritt 680 das Firmware-Update aus und speichert die einzigartige Nachverfolgungs-ID. In Schritt 682 überträgt die Steuereinrichtung 100 zur Aktualisierungs-Einrichtung 400 die Information, ob das Update, d.h. das Überschreiben des Systemspeichers, erfolgreich durchgeführt wurde, wobei das Update-Ergebnis in Schritt 685 dem Anwender angezeigt wird. Nach erfolgtem Firmware-Update geht die Steuereinrichtung 100 in Schritt 690 in einen Wartezustand auf Reset, d.h. auf einen Neustart der Steuereinrichtung 100, wobei auch eine automatische Durchführung eines Resets vorgesehen sein kann.

Die in Fig. 3 dargestellte Phase 2 umfasst die folgenden Schritte.

Nach Durchführen eines Neustarts der Steuereinrichtung 100 führt diese in Schritt 700 zunächst einen Selbsttest durch, wobei insbesondere auch die Paket-Verträglichkeit der den Steuermodulen 112 und 114 jeweils zugeordneten Firmware geprüft wird, wobei diese als diversitäre Firmware-Komponenten vorliegen können.

Wird in Schritt 705 ein Fehler bei Durchführen des Selbsttests erkannt, nimmt die Steuereinrichtung 100 in Schritt 710 einen sicheren Zustand ein. Die für die Erreichung eines sicheren Zustands erforderlichen Maßnahmen sind an sich bekannt und werden daher hier nicht näher erläutert.

Wird kein Fehler erkannt, geht die Steuereinrichtung 100 in Schritt 720 in den Normalbetrieb über. Das Download-Tool in der Aktualisierungs-Einrichtung 400 baut in Schritt 725 eine Verbindung zu der Steuereinrichtung 100 auf, wobei zu diesem vorzugsweise zyklisch wiederholt Verbindungsanfragen 727 zu der Steuereinrichtung 100 übertragen werden, bis die Steuereinrichtung 100 in Schritt 730 reagiert und die Verbindungsanfrage 727 in Schritt 732 beantwortet.

In Schritt 735 fragt das Download-Tool die aktualisierten Gerätedaten ab, wobei zu diesem Zweck die Aktualisierungs-Einrichtung 400 eine entsprechende Anfrage 737 zu der Steuereinrichtung 100 überträgt, die in Antwort auf diese Anfrage in Schritt 740 das Senden von Gerätedaten bewirkt, die in Schritt 742 zur Aktualisierungs-Einrichtung 400 übertragen werden. In Schritt 745 zeigt das Download-Tool die abgefragten Gerätedaten für den Bediener an, gegebenenfalls mit Fehlermeldung. Eine Bestätigung des Updates wird in Schritt 750 abgesichert zum Hersteller-Server 500 übertragen. In Antwort auf die in Schritt 752 übertragene Update-Bestätigung protokolliert bzw. speichert der Hersteller-Server 500 in Schritt 755 die Bestätigung in der PLM-DB 510. Eine Bestätigung der erfolgten Protokollierung wird in Schritt 757 zur Aktualisierungs-Einrichtung 400 übertragen und der Anwender wird in Schritt 760 über eine entsprechende Anzeige vom Abschluss des Vorgangs informiert.

In der nachfolgenden Tabelle ist beispielhaft die Struktur einer Firmware-Update-Datei, d.h. des sicheren Firmware-Containers dargestellt:

| Komponente | Inhalt | Beschreibung |
|---|---|---|
| Container-Header | **1.** Dateiname des Containers, d.h. der Firmware-Update-Datei | Name der Firmware-Update-Datei, die Datei ist damit gegen Umbenennung gesichert (Pos. 1 ist Teil der Pos. 6); eindeutige numerische Gerätekennung; Version der Firmware-Update-Datei; Anzahl nachfolgender Komponenten, beispielsweise bei mehreren, auch diversitären Steuermodulen |
| | **2.** Gerätekennung | |
| | **3.** Versionsnummer | |
| | **4.** Anzahl der enthaltenen Komponenten | |
| | **5.** Komponenten-Header 1: a) Ziel (z.B. Steuermodul 1 oder Steuermodul 2) | Sicherung des korrekten Ziels der Programmierung und Verifikation des enthaltenen Images; |
| | b) Typ des Images (Loader, Betriebssoftware, oder FPGA-Programm) | |
| | | Bestimmung der Pos. in der Firmware-Update-Datei Größe inkl. Image-Header; |
| | c) Offset-Adresse in der Firmware-Update-Datei d) Größe in der Firmware-Update-Datei | Zieladresse im Festwertspeicher; Sicherung gegen Verfälschung des Headers oder der Komponente |
| | e) Zieladresse | |
| | f) Prüfsumme über die komplette | |
| | Komponente (inkl. Header) | |
| | **6.** Komponenten-Header 2 ... n | weitere Komponenten-Header entsprechend der Anzahl in Pos. 4 |
| | **7.** Header-Prüfsumme über Pos. 1 bis 4 und alle Komponenten-Header | Prüfsumme über Pos. 1-6 (alle Komponenten-Header) |
| Firmware-Image 1 | 1. Image Header (Magic Number 1, Checksumme, Größe, Adressinformation) | Angaben für den Firmware-Loader |
| | 2. Firmware-Image 1 | das zu ladende Firmware-Image 1 |
| Firmware-Image ... | 1. Image Header ... | Angaben für den Firmware-Loader |
| | 2. Firmware-Image ... | die weiteren zu ladenden Firmware-Images ... |
| Firmware-Image n | 1. Image Header **n** | Angaben für den Firmware-Loader |
| | 2. FW-Image **n** | das zu ladende Firmware-Image **n** |

Es sei angemerkt, dass bei dem in der Tabelle dargestellten Beispiel die zu aktualisierende Firmware, auch als Firmware-Image bezeichnet, eine Betriebssoftware, eine zum Laden einer Betriebssoftware eingesetzte und als Loader bezeichnete Software, als auch ein zur Programmierung eines als FPGA (Field-Programmable Gate Array) ausgebildeten Prozessors eingesetztes FPGA-Programm umfassen kann.

Durch das beschriebene Verfahren wird vorteilhaft eine verteilte Vergleichs- und Freigabeeinrichtung außerhalb der Sicherheitssteuerung bereitgestellt. Damit wird ein abgesichertes Zustimmprinzip umgesetzt, wobei die Zustimmung bzw. der Vergleich und die Verantwortung zuerst beim Hersteller liegt, die Freigabe der Programmierung obliegt dem Download-Tool bzw. in letzter Instanz dem Bediener. Das Download-Tool liegt seinerseits in der Verantwortung des Herstellers. Eine Verschlüsselung der Firmware-Update-Datei ist vorteilhaft, aber an sich nicht zwingend erforderlich, da alle Schritte vorzugsweise durch ein vertrauliches Prüfsummenverfahren abgesichert sind. Durch die Umsetzung der wichtigen Vergleichs- und Freigabeschritte außerhalb der Firmware ist der eingesetzte Algorithmus besonders vorteilhaft bei Bedarf leicht anpassbar, ohne dass Änderungen der Firmware erfolgen müssen. Das Verfahren kann nach der ersten Abfrage der Gerätedaten prinzipiell unterbrochen werden, läuft aber vorteilhafterweise online nacheinander ab. Die Programmierung obliegt der Zustimmung durch den Bediener und wird durch ein abgesichertes Programmierkommando eingeleitet. Der einzigartige Code, der Bestandteil der Freischaltung ist und beim Hersteller generiert wurde, wird in der PLM-Datenbank 510 und nichtflüchtig auf der Steuereinrichtung 100 gespeichert, wobei dieser vorzugsweise Bestandteil des Programmierkommandos ist. Über diesen Code ist nachverfolgbar, über welche Freischaltung das Firmware-Update erfolgte, wobei der Code beim Hersteller und im Gerät gespeichert ist, wodurch eine doppelte Nachweiskette erreicht wird. Der einzigartige Code wird vorteilhaft über einen GUID (Globally Unique Identifier) realisiert. Ferner werden mögliche Abbrüche der Kommunikation durch Timeouts überwacht und ebenfalls beim Hersteller protokolliert, wobei vorteilhaft abgebrochene Updates zwischen der PLM-DB 510 und dem Anwender abgeglichen werden, wobei die dafür notwendigen Informationen vorliegen.

## Patentansprüche

1. Verfahren zur Firmware-Aktualisierung einer Steuereinrichtung (100) zur Prozesssteuerung mit wenigstens einem Steuermodul (112, 114), wobei dem Steuermodul (112, 114) eine in einem Systemspeicher (120) der Steuereinrichtung (100) gespeicherte Firmware zugeordnet ist, mit den Schritten:
a) Bereitstellen einer Firmware-Datei mit einer darin enthaltenen neuen Firmware für das wenigstens eine Steuermodul in einer mit der Steuereinrichtung (100) verbindbaren Aktualisierungs-Einrichtung (400),
b) Abrufen von in der Steuereinrichtung (100) gespeicherten ersten Gerätedaten durch die Aktualisierungs-Einrichtung (400),
c) Erzeugen einer signierten Geräte-Datei in Abhängigkeit der ersten Gerätedaten und in Abhängigkeit einer die neue Firmware identifizierenden Information durch die Aktualisierungs-Einrichtung (400),
d) Übertragen der signierten Geräte-Datei von der Aktualisierungs-Einrichtung (400) zu einer zentralen Freigabe-Einrichtung (500),
e) Prüfen der empfangenen signierten Geräte-Datei durch die zentrale Freigabe-Einrichtung (500),
f) Erzeugen eines Freischaltcodes durch die zentrale Freigabe-Einrichtung (500) und Übertragen des Freischaltcodes von der zentralen Freigabe-Einrichtung (500) zu der Aktualisierungs-Einrichtung (400) nur bei erfolgreicher Prüfung der empfangenen signierten Geräte-Datei durch die zentrale Freigabe-Einrichtung (500), wobei der Freischaltcode zweite Gerätedaten und eine einzigartige Identifikationsinformation umfasst,
g) Durchführen einer Konsistenzprüfung der in Schritt b) abgerufenen ersten Gerätedaten und der im empfangenen Freischaltcode enthaltenen zweiten Gerätedaten durch die Aktualisierungs-Einrichtung (400), oder
erneutes Abrufen der in der Steuereinrichtung (100) gespeicherten ersten Gerätedaten durch die Aktualisierungs-Einrichtung (400) und Durchführen einer Konsistenzprüfung der erneut abgerufenen ersten Gerätedaten und der im empfangenen Freischaltcode enthaltenen zweiten Gerätedaten durch die Aktualisierungs-Einrichtung (400), und
h) Durchführen einer Aktualisierung der Firmware der Steuereinrichtung (100) mit der neuen Firmware durch die Aktualisierungs-Einrichtung (400) nur bei erfolgreicher Konsistenzprüfung.

2. Verfahren nach Anspruch 1, wobei das Durchführen der Aktualisierung der Firmware der Steuereinrichtung (100) folgende Schritte umfasst:
- Übertragen der neuen Firmware als Firmware-Datei von der Aktualisierungs-Einrichtung (400) zu der Steuereinrichtung (100),
- Übertragen eines geräte-individuellen Aktualisierungs-Befehls von der Aktualisierungs-Einrichtung (400) zu der Steuereinrichtung (100), und
- unter Ansprechen auf den empfangenen Aktualisierungs-Befehl Aktualisieren der im Systemspeicher (120) gespeicherten Firmware des Steuermoduls (112, 114) mit der in der empfangenen Firmware-Datei enthaltenen Firmware.

3. Verfahren nach einem der vorstehenden Ansprüche, wobei die Firmware-Datei Absicherungsinformationen umfasst, und wobei die Steuereinrichtung (100) eine Konsistenzprüfung der Absicherungsinformationen ausführt und nur bei erfolgreicher Konsistenzprüfung einen Fortgang der Firmware-Aktualisierung zulässt.

4. Verfahren nach einem der vorstehenden Ansprüche, wobei die Firmware-Datei eine neue Firmware für wenigstens zwei Steuermodule (112, 114) umfasst.

5. Verfahren nach einem der vorstehenden Ansprüche, wobei die im Freischaltcode enthaltene einzigartige Identifikationsinformation von der Aktualisierungs-Einrichtung (400) zu der Steuereinrichtung (100) übertragen und in der Steuereinrichtung (100) gespeichert wird.

6. Verfahren nach einem der vorstehenden Ansprüche, wobei die ersten und/oder zweiten Gerätedaten einen Gerätetyp, eine Hardware-Version und/oder eine Seriennummer der Steuereinrichtung und/oder eine Information zu wenigstens einer von der Steuereinrichtung aktuell ausgeführten Firmware umfassen.

7. Verfahren nach einem der vorstehenden Ansprüche, wobei eine Prüfung auf Update-Berechtigung durch die zentrale Freigabe-Einrichtung (500) erfolgt, wobei aus einer Produktlebenszyklusmanagement-Datenbank (510) Freigabeinformationen abgerufen werden in Abhängigkeit von in der empfangenen signierten Geräte-Datei enthaltenen gerätespezifischen Informationen.

8. Verfahren nach einem der vorstehenden Ansprüche, wobei die Aktualisierungs-Einrichtung (400) eine Bestätigungsnachricht zu der zentralen Freigabe-Einrichtung (500) überträgt, wenn die Firmware-Aktualisierung erfolgreich durchgeführt wurde, wobei die zentrale Freigabe-Einrichtung in Antwort auf die empfangene Bestätigungsnachricht die erfolgreiche Durchführung der Firmware-Aktualisierung protokolliert, wobei insbesondere ein die einzigartige Identifikationsinformation umfassender Protokolleintrag in der Produktlebenszyklusmanagement-Datenbank (510) gespeichert wird.

9. Verfahren nach einem der vorstehenden Ansprüche, wobei die Steuereinrichtung (100) nach Aktualisieren der im Systemspeicher (120) gespeicherten Firmware des wenigstens einen Steuermoduls (112, 114) eine Prüfung der Verträglichkeit der unterschiedlichen Steuermodulen zugeordneten Firmware durchführt, und wobei die Steuereinrichtung (100) bei Erkennen einer Unverträglichkeit in einen sicheren Betriebszustand wechselt.

10. Verfahren nach einem der vorstehenden Ansprüche, wobei die Steuerungseinrichtung (100) als Sicherheitssteuerung zur fehlersicheren Steuerung eines sicherheitskritischen Prozesses ausgebildet ist.

11. Verfahren nach einem der vorstehenden Ansprüche, wobei
- das Übertragen der signierten Geräte-Datei von der Aktualisierungs-Einrichtung (400) zu einer zentralen Freigabe-Einrichtung (500),
- das Übertragen des Freischaltcodes von der zentralen Freigabe-Einrichtung (500) zu der Aktualisierungs-Einrichtung (400),
- das Übertragen des geräte-individuellen Aktualisierungs-Befehls von der Aktualisierungs-Einrichtung (400) zu der Steuereinrichtung (100) und/oder
- das Übertragen der im Freischaltcode enthaltenen einzigartigen Identifikationsinformation von der Aktualisierungs-Einrichtung (400) zu der Steuereinrichtung (100)
fehlergesichert und/oder verschlüsselt erfolgt.

12. System (10) zur Firmware-Aktualisierung einer Steuereinrichtung (100), umfassend,
- eine Steuereinrichtung (100) zur Prozesssteuerung mit wenigstens einem Steuermodul (112, 114), wobei dem Steuermodul (112, 114) eine in einem Systemspeicher (120) der Steuereinrichtung (100) gespeicherte Firmware zugeordnet ist,
- eine mit der Steuereinrichtung (100) verbindbare Aktualisierungs-Einrichtung (400), und
- eine zentrale Freigabe-Einrichtung (500), wobei die Aktualisierungs-Einrichtung (400) dazu ausgebildet ist,
a) in der Steuereinrichtung (100) gespeicherte erste Gerätedaten von der Steuereinrichtung (100) abzurufen,
b) in Abhängigkeit der ersten Gerätedaten und in Abhängigkeit einer eine neue Firmware identifizierenden Information eine signierte Geräte-Datei zu erzeugen,
c) die signierte Geräte-Datei zu der zentralen Freigabe-Einrichtung (500) zu übertragen,
d) von der zentralen Freigabe-Einrichtung (500) in Antwort auf die gesendete signierte Geräte-Datei einen Freischaltcode zu empfangen,
e) eine Konsistenzprüfung der in Schritt a) abgerufenen ersten Gerätedaten und im empfangenen Freischaltcode enthaltener zweiter Gerätedaten durchzuführen oder die in der Steuereinrichtung (100) gespeicherten ersten Gerätedaten von der Steuereinrichtung (100) erneut abzurufen und eine Konsistenzprüfung der erneut abgerufenen ersten Gerätedaten und im empfangenen Freischaltcode enthaltener zweiter Gerätedaten durchzuführen, und
f) bei erfolgreicher Konsistenzprüfung eine Aktualisierung der Firmware der Steuereinrichtung (100) mit der neuen Firmware zu bewirken,
und wobei die Freigabe-Einrichtung (500) dazu ausgebildet ist,
a) eine von der Aktualisierungs-Einrichtung (400) empfangene signierte Geräte-Datei zu prüfen,
b) bei erfolgreicher Prüfung einen Freischaltcode zu erzeugen, der zweite Gerätedaten und eine einzigartige Identifikationsinformation umfasst, und
c) den Freischaltcode in Antwort auf die empfangene signierte Geräte-Datei zu der Aktualisierungs-Einrichtung (400) zu übertragen.

13. System nach Anspruch 12, wobei
- die Steuereinrichtung dazu ausgebildet ist, die in dem von der Aktualisierungs-Einrichtung (400) empfangenen Freischaltcode enthaltene einzigartige Identifikationsinformation zu speichern,
- die Aktualisierungs-Einrichtung (400) dazu ausgebildet ist, eine Bestätigungsnachricht zu der zentralen Freigabe-Einrichtung (500) zu übertragen, wenn die Firmware-Aktualisierung erfolgreich durchgeführt wurde, und
- die zentrale Freigabeeinrichtung dazu ausgebildet ist, in Antwort auf die empfangene Bestätigungsnachricht die erfolgreiche Durchführung der Firmware-Aktualisierung zu protokollieren, wobei insbesondere ein die einzigartige Identifikationsinformation umfassender Protokolleintrag in einer Produktlebenszyklusmanagement-Datenbank (510) gespeichert wird.

14. Digitales Speichermedium mit darauf gespeicherten Anweisungen, welche dazu ausgebildet sind, folgende Verfahrensschritte auszuführen, wenn sie auf einem Computer (400) ausgeführt werden:
a) Abrufen von in einer mit dem Computer (400) verbundenen Steuereinrichtung (100) gespeicherten ersten Gerätedaten,
b) Erzeugen einer signierten Geräte-Datei in Abhängigkeit der ersten Gerätedaten und in Abhängigkeit einer Information, welche eine neu bereitgestellte Firmware identifiziert,
c) Übertragen der signierten Geräte-Datei zu einer zentralen Freigabe-Einrichtung (500),
d) Empfangen eines Freischaltcodes von der zentralen Freigabe-Einrichtung (500) in Antwort auf die gesendete signierte Geräte-Datei, wobei der Freischaltcode zweite Gerätedaten und eine einzigartige Identifikationsinformation umfasst,
e) Durchführen einer Konsistenzprüfung der in Schritt a) abgerufenen ersten Gerätedaten und der im empfangenen Freischaltcode enthaltenen zweiten Gerätedaten, oder
erneutes Abrufen der in der Steuereinrichtung gespeicherten ersten Gerätedaten und Durchführen einer Konsistenzprüfung der erneut abgerufenen ersten Gerätedaten und der im empfangenen Freischaltcode enthaltenen zweiten Gerätedaten, und
f) Bewirken, nur bei erfolgreicher Konsistenzprüfung, einer Aktualisierung der Firmware der Steuereinrichtung (100) mit der neuen Firmware.

## Claims

1. A method for updating firmware of a control device (100) for process control which comprises at least one control module (112, 114), wherein the control module (112, 114) has associated therewith firmware stored in a system memory (120) of the control device (100), the method comprising the steps of:
a) providing a firmware file with a new firmware contained therein for the at least one control module in an updating device (400) that is connectable to the control device (100);
b) retrieving, by the updating device (400), first device data stored in the control device (100);
c) generating, by the updating device (400), a signed device file depending on the first device data and depending on an information item identifying the new firmware;
d) transmitting the signed device file from the updating device (400) to a central enabling device (500);
e) checking the received signed device file by the central enabling device (500);
f) generating an activation code, by the central enabling device (500), and transmitting the activation code from the central enabling device (500) to the updating device (400) only if the check of the received signed device file by the central enabling device (500) is successful, wherein the activation code comprises second device data and a unique identification information item;
g) performing a consistency check on the first device data retrieved in step b) and on the second device data contained in the received activation code, by the updating device (400); or
again retrieving the first device data stored in the control device (100), by the updating device (400), and performing a consistency check on the again retrieved first device data and on the second device data contained in the received activation code, by the updating device (400); and
h) only if the consistency check is successful, performing an update of the firmware of the control device (100) using the new firmware, by the updating device (400).

2. The method as claimed in claim 1, wherein the performing of an update of the firmware of the control device (100) comprises the steps of:
- transferring the new firmware from the updating device (400) to the control device (100) in the form of a firmware file;
- transmitting a device-specific update command from the updating device (400) to the control device (100); and
- in response to the received update command, updating the firmware of the control module (112, 114) stored in the system memory (120) with the firmware contained in the received firmware file.

3. The method as claimed in any one of the preceding claims, wherein the firmware file comprises protection information, and wherein the control device (100) performs a consistency check on the protection information and only allows the firmware update to continue if the consistency check is successful.

4. The method as claimed in any one of the preceding claims, wherein the firmware file includes a new firmware for at least two control modules (112, 114).

5. The method as claimed in any one of the preceding claims, wherein the unique identification information item contained in the activation code is transmitted from the updating device (400) to the control device (100) and is stored in the control device (100).

6. The method as claimed in any one of the preceding claims, wherein the first and/or second device data include a device type, a hardware version, and/or a serial number of the control device, and/or information about at least one firmware currently executed on the control device.

7. The method as claimed in any one of the preceding claims, wherein an update authorization check is performed by the central enabling device (500), by retrieving authorization information from a product life cycle management database (510) on the basis of device-specific information contained in the received signed device file.

8. The method as claimed in any one of the preceding claims, wherein, once the firmware update has been successfully performed, the updating device (400) transmits an acknowledgment message to the central enabling device (500), wherein in response to the received acknowledgment message the central enabling device logs successful completion of the firmware update, in particular by storing a log entry containing the unique identification information item in the product life cycle management database (510).

9. The method as claimed in any one of the preceding claims, wherein, once the firmware of the at least one control module (112, 114) stored in the system memory (120) has been updated, the control device (100) performs a check for compatibility of the firmware associated with different control modules, and if an incompatibility is detected, the control device (100) changes into a safe operating state.

10. The method as claimed in any one of the preceding claims, wherein the control device (100) is configured as a safety control device for failsafe control of a safety-critical process.

11. The method as claimed in any one of the preceding claims, wherein
- the transmitting of the signed device file from the updating device (400) to a central enabling device (500), and/or
- the transmitting of the activation code from the central enabling device (500) to the updating device (400), and/or
- the transmitting of the device-specific updating command from the updating device (400) to the control device (100), and/or
- the transmitting of the unique identification information item contained in the activation code from the updating device (400) to the control device (100) is performed in failsafe and/or encrypted manner.

12. A system (10) for updating firmware of a control device (100), comprising:
- a control device (100) for process control comprising at least one control module (112, 114), wherein the control module (112, 114) has associated therewith a firmware stored in a system memory (120) of the control device (100);
- an updating device (400) connectable to the control device (100); and
- a central enabling device (500);
wherein the updating device (400) is adapted:
a) to retrieve, from the control device (100), first device data stored in the control device (100);
b) to generate a signed device file depending on the first device data and depending on an information item identifying a new firmware;
c) to transmit the signed device file to the central enabling device (500);
d) to receive an activation code from the central enabling device (500) in response to the transmitted signed device file;
e) to perform a consistency check on the first device data retrieved in step a) and on second device data contained in the received activation code, or to again retrieve the first device data stored in the control device (100) from the control device (100) and to perform a consistency check on the again retrieved first device data and on second device data contained in the received activation code; and
f) if the consistency check is successful, to effect update of the firmware of the control device (100) using the new firmware;
and wherein the enabling device (500) is adapted:
a) to check a signed device file received from the updating device (400);
b) if the check is successful, to generate an activation code comprising second device data and a unique identification information item; and
c) to transmit the activation code to the updating device (400) in response to the received signed device file.

13. The system as claimed in claim 12, wherein
- the control device is adapted to store the unique identification information item contained in the activation code received from the updating device (400) ;
- the updating device (400) is adapted to transmit an acknowledgment message to the central enabling device (500) when the firmware updating has been performed successfully; and
- the central enabling device is adapted, in response to the received acknowledgment message, to log successful completion of the firmware update, in particular by storing a log entry containing the unique identification information item in the product life cycle management database (510).

14. A digital storage medium with instructions stored thereon, which when executed on a computer (400) are adapted to perform the following method steps:
a) retrieving first device data stored in a control device (100) connected to the computer (400);
b) generating a signed device file depending on the first device data and depending on information identifying a newly provided firmware;
c) transmitting the signed device file to a central enabling device (500);
d) receiving an activation code from the central enabling device (500) in response to the transmitted signed device file, the activation code comprising second device data and a unique identification information item;
e) performing a consistency check on the first device data retrieved in step a) and on the second device data contained in the received activation code, or again retrieving the first device data stored in the control device and performing a consistency check on the again retrieved first device data and the second device data contained in the received activation code; and
f) only if the consistency check is successful, effecting update of the firmware of the control device (100) using the new firmware.

## Revendications

1. Procédé d'actualisation de microprogramme d'un dispositif de commande (100) pour la commande de processus, avec au moins un module de commande (112, 114), où un microprogramme enregistré dans une mémoire système (120) du dispositif de commande (100) est affecté au module de commande (112, 114), avec les étapes :
a) fourniture d'un fichier de microprogramme contenant un nouveau microprogramme pour l'au moins un module de commande dans un dispositif d'actualisation (400) pouvant être raccordé au dispositif de commande (100),
b) appel, par le dispositif d'actualisation (400), de premières données d'appareil enregistrées dans le dispositif de commande (100),
c) production, par le dispositif d'actualisation (400), d'un fichier d'appareil signé en fonction des premières données d'appareil et en fonction d'une information identifiant le nouveau microprogramme,
d) transmission du fichier d'appareil signé à partir du dispositif d'actualisation (400) vers un dispositif de validation (500) central,
e) contrôle, par le dispositif de validation (500) central, du fichier d'appareil signé reçu,
f) production d'un code de déblocage par le dispositif de validation (500) central et transmission du code de déblocage à partir du dispositif de validation (500) central vers le dispositif d'actualisation (400) uniquement en cas de succès du contrôle du fichier d'appareil signé reçu et effectué par le dispositif de validation (500) central, le code de déblocage comprenant des deuxièmes données d'appareil et une information d'identification unique,
g) réalisation, par le dispositif d'actualisation (400), d'un contrôle de cohérence des premières données d'appareil appelées dans l'étape b) et des deuxièmes données d'appareil contenues dans le code de déblocage reçu, ou
nouvel appel, par le dispositif d'actualisation (400), des premières données d'appareil enregistrées dans le dispositif de commande (100), et réalisation, par le dispositif d'actualisation (400), d'un contrôle de cohérence des premières données d'appareil appelées de nouveau et des deuxièmes données d'appareil contenues dans le code de déblocage reçu,
h) réalisation d'une actualisation du microprogramme du dispositif de commande (100) avec le nouveau microprogramme par le dispositif d'actualisation (400) uniquement en cas de succès du contrôle de cohérence.

2. Procédé selon la revendication 1, où la réalisation de l'actualisation du microprogramme du dispositif de commande (100) comprend les étapes suivantes :
- transmission du nouveau microprogramme en tant que fichier de microprogramme à partir du dispositif d'actualisation (400) vers le dispositif de commande (100),
- transmission, à partir du dispositif d'actualisation (400) vers le dispositif de commande (100), d'une instruction d'actualisation individuelle à l'appareil et
- en réaction à l'instruction d'actualisation reçue, actualisation du microprogramme du module de commande (112, 114) enregistré dans la mémoire système (120) avec le microprogramme contenu dans le fichier de microprogramme reçu.

3. Procédé selon l'une des revendications précédentes, où le fichier de microprogramme comprend des informations de protection, et où le dispositif de commande (100) exécute un contrôle de cohérence des informations de protection, et n'autorise une poursuite de l'actualisation de microprogramme qu'en cas de succès du contrôle de cohérence.

4. Procédé selon l'une des revendications précédentes, où le fichier de microprogramme comprend un nouveau microprogramme pour au moins deux modules de commande (112, 114).

5. Procédé selon l'une des revendications précédentes, où l'information d'identification unique contenue dans le code de déblocage est transmise à partir du dispositif d'actualisation (400) vers le dispositif de commande (100) et enregistrée dans le dispositif de commande (100).

6. Procédé selon l'une des revendications précédentes, où les premières et/ou deuxièmes données d'appareil comprennent un type d'appareil, une version du matériel et/ou un numéro de série du dispositif de commande et/ou une information concernant au moins un microprogramme exécuté actuellement par le dispositif de commande.

7. Procédé selon l'une des revendications précédentes, où un contrôle d'autorisation d'update est effectué par le dispositif de validation (500) central, des informations de validation étant appelées en provenance d'une base de données de gestion de cycle de vie de produit (510) en fonction d'informations spécifiques à l'appareil contenues dans le fichier d'appareil signé reçu.

8. Procédé selon l'une des revendications précédentes, où le dispositif d'actualisation (400) transmet un message de confirmation au dispositif de validation (500) central quand l'actualisation de microprogramme a été effectuée avec succès, où le dispositif de validation central consigne, en réponse au message de confirmation reçu, la réalisation réussie de l'actualisation de microprogramme, où une entrée de journal comprenant une information d'identification unique est en particulier enregistrée dans la base de données de gestion de cycle de vie de produit (510).

9. Procédé selon l'une des revendications précédentes, où, après l'actualisation du microprogramme, enregistré dans la mémoire du système (120), de l'au moins un module de commande (112, 114), le dispositif de commande (100) effectue un contrôle de la compatibilité du microprogramme affecté à différents modules de commande, et le dispositif de commande (100) passe à un état de fonctionnement sûr lors de la détection d'une incompatibilité.

10. Procédé selon l'une des revendications précédentes, où le dispositif de commande (100) est constitué en tant que commande de sécurité destinée à la commande à sécurité intégrée d'un processus critique pour la sécurité.

11. Procédé selon l'une des revendications précédentes, où
- la transmission du fichier d'appareil signé à partir du dispositif d'actualisation (400) vers un dispositif de validation (500) central,
- la transmission du code de déblocage à partir du dispositif de validation (500) central vers le dispositif d'actualisation (400),
- la transmission, à partir du dispositif d'actualisation (400) vers le dispositif de commande (100), de l'instruction d'actualisation individuelle à l'appareil, et/ou
- la transmission de l'information d'identification unique contenue dans le code de déblocage à partir du dispositif d'actualisation (400) vers le dispositif de commande (100)
s'effectuent avec une sécurité intégrée et/ou de façon chiffrée.

12. Système (10) d'actualisation de microprogramme d'un dispositif de commande (100), comprenant
- un dispositif de commande (100) pour la commande de processus, avec au moins un module de commande (112, 114), où un microprogramme enregistré dans une mémoire système (120) du dispositif de commande (100) est affecté au module de commande (112, 114),
- un dispositif d'actualisation (400) pouvant être raccordé au dispositif de commande (100), et
- un dispositif de validation (500) central, où le dispositif d'actualisation (400) est constitué pour
a) appeler en provenance du dispositif de commande (100) des premières données d'appareil enregistrées dans le dispositif de commande (100),
b) produire un fichier d'appareil signé en fonction des premières données d'appareil et en fonction d'une information identifiant un nouveau microprogramme,
c) transmettre le fichier d'appareil signé au dispositif de validation (500) central,
d) recevoir un code de déblocage en provenance du dispositif de validation (500) central en réponse au fichier d'appareil signé émis,
e) effectuer un contrôle de cohérence des premières données d'appareil appelées dans l'étape a) et des deuxièmes données d'appareil contenues dans le code de déblocage reçu, ou appeler de nouveau en provenance du dispositif de commande (100) les premières données d'appareil enregistrées dans le dispositif de commande (100) et effectuer un contrôle de cohérence des premières données d'appareil appelées de nouveau et des deuxièmes données d'appareil contenues dans le code de déblocage reçu, et
f) en cas de réussite du contrôle de cohérence, causer une actualisation du microprogramme du dispositif de commande (100) avec le nouveau microprogramme,
et où le dispositif de validation (500) est constitué pour
a) contrôler un fichier d'appareil signé reçu en provenance du dispositif d'actualisation (400),
b) en cas de réussite du contrôle, produire un code de déblocage qui comprend des deuxièmes données d'appareil et une information d'identification unique, et
c) transmettre au dispositif d'actualisation (400) le code de déblocage en réponse au fichier d'appareil signé reçu.

13. Système selon la revendication 12, où
- le dispositif de commande est constitué pour enregistrer l'information d'identification unique contenue dans le code de déblocage reçu en provenance du dispositif d'actualisation (400),
- le dispositif d'actualisation (400) est constitué pour transmettre un message de confirmation au dispositif de validation (500) central quand l'actualisation de microprogramme a été effectuée avec succès, et
- le dispositif de validation central est constitué pour, en réponse au message de confirmation reçu, consigner la réalisation réussie de l'actualisation de microprogramme, une entrée de journal comprenant l'information d'identification unique étant en particulier enregistrée dans une base de données de gestion de cycle de vie de produit (510).

14. Support de mémoire numérique portant des instructions enregistrées qui sont constituées pour exécuter les étapes de procédé suivantes quand elles sont exécutées sur un ordinateur (400) :
a) appel de premières données d'appareil enregistrées dans un dispositif de commande (100) raccordé à l'ordinateur (400),
b) production d'un fichier d'appareil signé en fonction des premières données d'appareil et en fonction d'une information qui identifie un microprogramme nouvellement fourni,
c) transmission du fichier d'appareil signé à un dispositif de validation (500) central,
d) réception d'un code de déblocage en provenance du dispositif de validation (500) central en réponse au fichier d'appareil signé émis, le code de déblocage comprenant des deuxièmes données d'appareil et une information d'identification unique,
e) réalisation d'un contrôle de cohérence des premières données d'appareil appelées dans l'étape a) et des deuxièmes données d'appareil contenues dans le code de déblocage reçu, ou
nouvel appel des premières données d'appareil enregistrées dans le dispositif de commande et réalisation d'un contrôle de cohérence des premières données d'appareil appelées de nouveau et des deuxièmes données d'appareil contenues dans le code de déblocage reçu, et
f) mise en œuvre, uniquement en cas de contrôle de cohérence réussi, d'une actualisation du microprogramme du dispositif de commande (100) avec le nouveau microprogramme.
